# EUROPÄISCHE PATENTSCHRIFT

(11) **EP 4 082 764 B1**
(45) Veröffentlichungstag und Bekanntmachung des Hinweises auf die Patenterteilung: **10.04.2024**
(21) Anmeldenummer: 22169425.0
(22) Anmeldetag: 22.04.2022
(51) Int. Cl.: B30B 5/06, B27N 1/02, B27N 3/02, B27N 3/14, B27N 3/24, G01B 15/08, G01N 33/46, B27N 3/18, B27N 1/00

(54) **VERFAHREN UND VORRICHTUNG ZUR PRÜFUNG EINES SPÄNEKUCHENS**
METHOD AND DEVICE FOR TESTING A CHIP CAKE
PROCÉDÉ ET DISPOSITIF DE VÉRIFICATION D'UN PANNEAU DE PARTICULES

(30) Priorität: 27.04.2021 DE 102021110726
(43) Veröffentlichungstag der Anmeldung: 02.11.2022
(73) Patentinhaber: Rheinspan GmbH & Co. KG, 76726 Germersheim (DE)
(72) Erfinder: TSCHINKOWITZ, Tobias, 74336 Brackenheim (DE); LERACH, Karl Josef, 94227 Lindberg (DE)
(74) Vertreter: Patentanwälte Gierlich & Pischitzis Partnerschaft mbB

(56) Entgegenhaltungen:
- EP-A1- 1 319 492
- EP-A2- 2 239 116
- WO-A1-89/08836
- WO-A1-98/07023
- WO-A1-2007/137391
- DE-A1-102008 030 417
- US-A1- 2016 153 917

## Beschreibung

### Gebiet der Erfindung

Die Erfindung betrifft ein Verfahren zur Prüfung eines sich kontinuierlich bewegenden Spänekuchens, der zur Spanplattenherstellung einer Pressanlage zugeführt wird. Die Erfindung betrifft dabei insbesondere ein Verfahren zur Steuerung einer kontinuierlichen Streuanlage, sowie eine mit einer Vorrichtung zur Prüfung eines sich kontinuierlich bewegenden Spänekuchens ausgestattete Pressanlage.

Bei der Spanplattenherstellung im kontinuierlichen Verfahren wird unter Verwendung einer Pressanlage ein Spänekuchen unter Druck und Hitze zu einer fertigen Spanplatte geformt. Der Spänekuchen durchläuft dabei auf Stahlbändern einen Pressspalt der Anlage. Da die Stahlbänder nicht durch eine Zwangsführung mittig durch einen Pressspalt der Anlage gefahren werden können, muss mit Regeleinheiten, wie z.B. Regelrollen, gegen unerwünschten Bandlauf quer zur Transportrichtung des Spänekuchens gewirkt werden, der durch unterschiedliche Druckbeaufschlagung im Pressspalt entsteht und zu einer unerwünschten erhöhten Reibung zwischen Band und Rollstangen führt, die die Presse wie ein Nadellager umlaufen.

Eine Ursache hierfür kann eine ungleichmäßige Verteilung des Spänekuchens sein, der z.B. an der rechten Kante des Bands mit entsprechend höherem Anpressdruck auf das Band vergleichsweise erhöht sein kann. Ab einem maximalen Verlauf von 25 mm quer zur Transportrichtung, muss die Presse von der Pressensteuerung angehalten und von Hand entleert werden, wonach sich das Stahlband wieder bestimmungsgemäß in das Zentrum des Pressenspalts bewegen kann. Dadurch entsteht ein nicht unerheblicher Produktionsausfall, insbesondere auch weil die Spanplatte, die sich noch im Pressenspalt befindet, nur mit deutlichem Mehraufwand wiederverwendet werden kann.

Um das Band im Pressspalt mittig zu halten, kann zwar mit Hilfe der Pressensteuerung die obere Heizplatte gekippt werden, um die Druckverhältnisse auf das Stahlband zu korrigieren. Hieraus resultiert jedoch eine nachteilhaft nicht parallele Plattenoberfläche mit einer entsprechend mangelhaften Oberflächenqualität des fertigen Produktes. Dies führt nach dem Schleifprozess dazu, dass grobe Späne der Mittelschicht an der Plattenoberfläche sichtbar werden, was einen erheblichen Qualitätsmangel der fertiggestellten Spanplatte darstellt.

### Stand der Technik

Beispielsweise aus der DE 101 60 398 A1 ist ein Flächengewichtsmesssystem bekannt, bei dem das Flächengewicht einer kontinuierlich bewegten Bahn aus gestreutem Material abschnittsweise berührungslos über die Breite oder vollständig im Vor-und Nachpressenbereich ermittelt werden kann. Damit ist ein Verfahren und eine Vorrichtung zur Prüfung einer sich kontinuierlich bewegenden Pressgutmatte mittels Röntgenstrahlung bekannt geworden, die in der Lage ist, auf einem Formband nach dem Streukopf einer Streumaschine eine vollständig gestreute Pressgutmatte vor dem Eintritt in eine kontinuierlich arbeitende Presse zu überprüfen. Aufgabe ist die Überwachung der Pressgutmatte auf Fremdkörper oder Agglomerationen von Spänen bzw. Leimklumpen, die durch eine Dichteerhöhung im Pressbereich der nachfolgenden kontinuierlich arbeitenden Presse zu Schäden an den Stahlpressbändern führen können. Dieses Verfahren und die zugehörige Vorrichtung kommt beim Herstellungsprozess von Werkstoffplatten, besonders bei kontinuierlicher Anwendung, zum Einsatz, wobei die Messung über die Breite der Streugutmatte abschnittsweise definiert durchgeführt und entsprechend ausgewertet werden kann. Das Messsystem ist dabei kurz vor der kontinuierlich arbeitenden Presse angeordnet.

Derartige auf Röntgenstrahlung basierende Messeinrichtungen führen in deren umliegenden Bereich zu einer nachteilhaft erhöhten Strahlenbelastung, sodass für deren Betrieb eine wiederholte, aufwendige, amtliche Zertifizierung erforderlich ist.

In der WO 2007/137391 A1 wird ein Verfahren und eine Vorrichtung zur Messung der tatsächlichen Dicke sowie der Orientierungswinkel eines Bandes, z. B. eines aus einer Walzvorrichtung austretenden, sich bewegenden Blechs, beschrieben. Die Dicke und die Winkel werden durch drei durchdringende Strahlen (z. B. Röntgenstrahlen) gemessen, die sich an einem gemeinsamen Schnittpunkt des Körpers des Blechartikels kreuzen. Ein Strahl verläuft im Allgemeinen senkrecht zum Blechartikel, die anderen sind in Längs- und Querrichtung des Blechartikels ausgerichtet. Die Winkel zwischen den Strahlen sind im Allgemeinen fest und bekannt. Die von den drei Strahlen gemessenen Dicken können zusammen mit den jeweiligen Ausrichtungswinkeln verwendet werden, um die tatsächliche Dicke des Blechartikels sowie die Winkel der Durchbiegung oder Unplanheit in Quer- und Längsrichtung an der Messstelle zu berechnen. Durch Messung dieser Werte an verschiedenen Punkten des Bandes kann ein Dicken- und Orientierungsprofil des Bandes erstellt werden. Das Dokument DE 10 2008 030417 A1 offenbart ein Verfahren nach dem Oberbegriff des Anspruchs 1 und eine Anlage nach dem Oberbegriff des Anspruchs 8.

### Aufgabe

Aufgabe der Erfindung ist daher ein Verfahren zur Prüfung eines sich kontinuierlich bewegenden Spänekuchens anzugeben, der zur Spanplattenherstellung einer Pressanlage zugeführt wird. Hierbei ist außerdem insbesondere Aufgabe der Erfindung ein Verfahren zur Steuerung einer kontinuierlichen Pressanlage, sowie eine mit einer Vorrichtung zur Prüfung eines sich kontinuierlich bewegenden Spänekuchens ausgestattete Pressanlage anzugeben.

### Lösung

Diese Aufgabe wird durch die Erfindungen mit den Merkmalen der unabhängigen Ansprüche 1 und 8 gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Im Folgenden werden eine erfindungsgemäße Anlage und erfindungsgemäße Verfahren jeweils mit einzelnen Verfahrensschritten näher beschrieben. Die Schritte müssen nicht notwendigerweise in der angegebenen Reihenfolge durchgeführt werden, und die Verfahren können auch weitere, nicht genannte Schritte aufweisen.

Die Erfindung betrifft insbesondere ein erstes Verfahren zur Prüfung eines sich kontinuierlich bewegenden Spänekuchens, der zur Spanplattenherstellung auf einem Stahlband einer kontinuierlichen Pressanlage zugeführt wird, bei dem in einem ersten Schritt eine Topografie des Spänekuchens kontinuierlich entlang eines Messprofils, nämlich einer linienförmig angelegten Messreihe quer zum Spänekuchen, mittels einem Wegmessverfahren gemessen wird. Das Wegmessverfahren kann insbesondere vorteilhaft auf dem Prinzip der Laufzeitmessung beruhen, wobei ein geeigneter Wegsensor insbesondere ein Lasersensor oder ein Infrarotsensor sein kann.

Die Verwendung insbesondere eines Lasermessverfahrens zur Vermessung der Topografie eines Spänekuchens gestattet eine wünschenswerte Auflösung der Messung und damit zuverlässige Prüfung des Spänekuchens, ohne dabei eine erhöhte Strahlenbelastung hervorzurufen, und wonach für die Durchführung des Verfahrens und den Betrieb einer entsprechenden nachfolgend beschriebenen Lasermesseinrichtung keine wiederholte, aufwendige, amtliche Zertifizierung erforderlich ist.

Außerdem wird eine Vorrichtung zur Prüfung eines sich kontinuierlich bewegenden Spänekuchens beschrieben, der zur Spanplattenherstellung auf einem Stahlband einer kontinuierlichen Pressanlage zugeführt wird, wobei die Vorrichtung insbesondere zur Durchführung des vorstehenden Verfahrens geeigneter Weise eine Wegmesseinrichtung ist, die einen Infrarotsensor oder einen Lasersensor aufweist, und wobei der Infrarotsensor oder Lasersensor zur Messung einer Topografie des Spänekuchens kontinuierlich entlang eines Messprofils des Spänekuchens quer zur Transportrichtung des Spänekuchens auf dem Stahlband verfahrbar angeordnet ist.

Eine Lasermesseinrichtung kann einen für eine Laufzeitmessung oder für ein Phasen- oder Frequenzlaufverfahren geeigneten Laser und geeigneter Weise insbesondere einen Triangulationslaser aufweisen. Ein Triangulationslaser ist besonders vorteilhaft, nachdem der Triangulationslaser ein rein geometrisches Messverfahren gestattet und geeigneter Weise in einem Abstand von 100 mm bis 500 mm und vorteilhaft 200 mm bis 300 mm und besonders vorteilhaft 250 mm von dem Spänekuchen angeordnet sein kann und dabei eine Auflösung von geeigneter Weise 0,20 mm bis 0,30 mm und vorteilhaft 0,25 mm aufweisen kann.

Bei dem Laser kann es sich geeigneter Weise um einen Laser der Schutzklasse 2 handeln, der ohne weitere Schutzmaßnahmen eingesetzt werden kann, wenn sichergestellt ist, dass sich im Rahmen seiner Anwendung weder ein absichtliches Hineinschauen von > 250 ms, noch wiederholtes Hineinschauen in die Laserstrahlung ergibt. Es ist klar, dass bei der Lasermesseinrichtung daher eine geeignete Abschirmung beispielsweise mittels einer geeignet angeordneten und ausgebildeten Schutzwanne vorgesehen ist.

Der Laser der Lasermesseinrichtung ist zur Durchführung des vorstehenden Verfahrens wie vorstehend beschrieben geeigneter Weise quer zu dem Stahlband verfahrbar angeordnet, wofür die Lasermesseinrichtung einen geeigneten Antrieb aufweist, der derart eingerichtet ist, dass der Laser aus einer Ruheposition in eine erste Messposition bis zu einer zweiten Messposition verfahrbar ist, die derart angeordnet sind, dass mittels des Lasers in der ersten und zweiten Messposition jeweils auch ein zu einem seitlichen Rand des Spänekuchens benachbarter Bereich des Stahlbands vermessen wird. Auf diese Weise ist vorteilhaft sichergestellt, dass ein vollständiges Profil des Spänekuchens erfasst werden kann.

Bei dem Antrieb kann es sich geeigneter Weise um einen elektrischen Antrieb und beispielsweise um einen Schrittmotor handeln, der über eine geeignete Mechanik mit dem Laser zusammenwirken kann, und der geeigneter Weise außerdem eine Einrichtung zur Erfassung der Drehwinkel seiner Antriebseinheit aufweisen kann, wonach mittels des Antriebs vorteilhaft eine Position des Lasers signal- und datentechnisch erfassbar ist. Alternativ kann eine direkte Positionsbestimmung des Lasers etwa mittels einer benachbart zu dem Antrieb angeordneten optischen oder mechanischen geeigneten Messeinrichtung durchgeführt werden.

Der Antrieb ist geeigneter Weise derart eingerichtet, dass die Geschwindigkeit, mit der der Laser quer zu dem Spänekuchen verfahren wird, geeigneter Weise zwischen 10 mm/s und 500 mm/s und vorteilhaft zwischen 35 mm/s und 350 mm/s beträgt. Die Lasermesseinrichtung ist dabei vorteilhaft derart eingerichtet, dass bei einer Verfahrgeschwindigkeit in einem Bereich von etwa 345 mm/s, drei Messungen pro mm durchgeführt werden und bei einer Verfahrgeschwindigkeit in einem Bereich von etwa 15 mm/s, sieben Messungen pro mm durchgeführt werden. Auf diese Weise kann eine vorstehend beschriebene wünschenswerte Auflösung erzielt werden. Die Verfahrgeschwindigkeit kann dabei insbesondere vorteilhaft mittels absoluten oder relativen Regelkreises kontinuierlich auch korrespondierend mit der Transportgeschwindigkeit des Spänekuchens auf dem Stahlband insbesondere derart eingestellt werden, dass sich ein vorteilhaft im Wesentlichen lineares Messprofil ergibt.

Zur Funktionssicherheit des Lasers weist die Lasermesseinrichtung außerdem eine vorteilhaft pneumatische Reinigungseinheit auf, die geeigneter Weise benachbart zu der Ruheposition des Lasers angeordnet sein kann, und die derart eingerichtet ist, dass die Optik des Lasers, insbesondere von Staub, gereinigt werden kann.

In einem zweiten Schritt des vorstehenden ersten Verfahrens wird geeigneter Weise die gemessene Topografie des Messprofils des Spänekuchens oder die gemessene Topografie des Profils auf ein Querprofil quer und insbesondere senkrecht zur Transportrichtung des Spänekuchens extrapoliert und als erste Anzeige auf einem Monitor, zusammen mit weiteren zur Kennzeichnung der Topografie und des Spänekuchens geeigneten Daten, angezeigt.

Bei den weiteren Daten kann es sich um messtechnisch und verfahrenstechnisch relevante Daten handeln, nämlich um Einstellungen einer verwendeten Lasermesseinrichtung, wie beispielsweise Merkmale des verwendeten Lasers, den Abstand dessen Optik von dem Spänekuchen, dessen Auflösung, Verfahrgeschwindigkeit, etc., sowie um weitere Parameter, wie beispielsweise Temperatur, Luftfeuchtigkeit, etc., die von geeigneten Sensoren bereitgestellt und abgerufen werden können.

Die weiteren Daten können außerdem produktionsrelevante Daten und Vorgaben umfassen, wie verwendetes Material zur Bereitstellung des Spänekuchens, Dicke der Spanplatte, Transportgeschwindigkeit des Bands, etc. Darüber hinaus können allgemeine und auch betriebswirtschaftliche Daten, wie Datum und Uhrzeit, Auftragsnummer, Bedienperson der Anlage, etc. als weitere Daten zusammen mit der Topografie aufgezeichnet werden.

Das Messprofil oder das extrapolierte Querprofil kann geeigneter Weise zusammen mit den weiteren zur Kennzeichnung der Topografie und des Spänekuchens geeigneten Daten gespeichert werden, wonach die Messung mit dem Messprofil und dem extrapolierten Querprofil vorteilhaft protokolliert wird und zum Vergleich mit weiteren Messungen und auch für weitere Auswertungen zur Verfügung steht.

In einem dritten Schritt des ersten Verfahrens wird geeigneter Weise ein Vergleich der gemessenen Topografie des Messprofils des Spänekuchens oder ein Vergleich der gemessenen Topografie des Profils auf ein Querprofil quer und insbesondere senkrecht zur Transportrichtung des Spänekuchens extrapoliert, mit einer vorbestimmten Topografie und/oder mit wenigstens einer gespeicherten Topografie und/oder mit einer vorbestimmten optimalen Dicke und/oder mit einem vorbestimmten Toleranzbereich durchgeführt.

Mittels dem vorstehenden Vergleich kann auf einfache Weise hard- und softwaregestützt und/oder von einer Bedienperson eine Bewertung der Topografie durchgeführt werden, wobei die Bewertung des Vergleichs der gemessenen Topografie mit der vorbestimmten und/oder gespeicherten Topografie und/oder mit der vorbestimmten Dicke und/oder mit dem Toleranzbereich vorteilhaft als ein Signal ausgegeben werden kann, das insbesondere für die Bewertung von einer Bedienperson in der ersten Anzeige auf dem Monitor angezeigt werden kann. Der Vergleich und die Bewertung können außerdem wie die vorstehend beschriebene Topografie gespeichert werden.

Bei dem Signal kann es sich außerdem um ein Steuersignal handeln, das von einer Steuerung einer Anlage zur kontinuierlichen Spanplattenherstellung anlagentechnisch verwendet werden kann, wobei das Signal insbesondere auch für eine Verwendung in dem nachfolgend beschriebenen zweiten Verfahren zur Überwachung und Steuerung des Betriebs der Anlage zur Verfügung gestellt werden kann.

Es ist klar, dass insbesondere die von der Lasermesseinrichtung gemessenen Daten der Topografie, zusammen mit von weiteren Sensoren gemessenen Daten, wie beispielsweise die Position des Lasers und auch das vorstehend beschriebene Signal über geeignete Schnittstellen, signal- und datentechnisch für die Steuereinrichtung der Anlage zur Verfügung stehen. Es ist außerdem klar, dass die Steuereinrichtung auch eine zur Durchführung des ersten und zweiten Verfahrens geeignete Hard- und Software und eine geeignete Speichereinheit aufweisen kann oder signal- und datentechnisch mit einer entsprechenden Hard- und Software und Speichereinheit verbunden sein kann.

Die Erfindung betrifft demnach insbesondere außerdem eine Anlage zur kontinuierlichen Spanplattenherstellung mit einer Formstation zur Bildung eines Spänekuchens auf einem Stahlband zur Zuführung des Spänekuchens zu einer Pressanlage und mit einer Steuereinrichtung zum Betrieb der Anlage und mit einem Monitor zur Anzeige des Betriebszustands der Anlage, wobei die Formstation zur Bildung des Spänekuchens wenigstens einen mittels einem manuell und/oder elektrisch verstellbaren Streukopfschieber einstellbaren Streukopf aufweist.

Die Anlage weist dabei zur Durchführung des vorstehend beschriebenen ersten Verfahrens und des nachfolgend beschriebenen zweiten Verfahrens besonders vorteilhaft eine vorstehend beschriebene Lasermesseinrichtung auf, die geeigneter Weise in Transportrichtung des Stahlbands nach der Formstation der Anlage vorgesehen ist.

Die Erfindung betrifft demnach insbesondere außerdem ein zweites Verfahren zur Überwachung und Steuerung des Betriebs einer vorstehenden Anlage, bei dem in einem ersten Schritt des Verfahrens der erste, zweite und dritte Schritt des vorstehend beschriebenen ersten Verfahrens durchgeführt wird. In dem zweiten Verfahren wird dabei insbesondere die Lasermesseinrichtung, die Steuereinrichtung und der Monitor der Anlage verwendet.

In einem zweiten Schritt des zweiten Verfahrens kann geeigneter Weise, unter Berücksichtigung der in Schritt drei des ersten Verfahrens durchgeführten Bewertung der gemessenen Topografie des Spänekuchens, die Steuereinrichtung der Anlage verwendet werden, insbesondere einen Streukopfschieber eines Streukopfes der Formstation zur Korrektur und zur Optimierung des Betriebs der Anlage und der Topografie hard- und softwaregestützt einzustellen. Auf diese Weise kann eine hard- und softwaregestützte, vorteilhaft automatische Korrektur des Betriebs der Anlage und der Topografie des Spänekuchens durchgeführt werden.

In einem dritten Schritt des zweiten Verfahrens kann geeigneter Weise, unter Berücksichtigung der Bewertung der Topografie des Spänekuchens in Schritt drei des ersten Verfahrens, eine automatische Korrektur der Topografie des Spänekuchens als Zusammenschau der Topografie mit Dickenmittelwerten ausgewählter Spuren des Messprofils oder extrapolierten Querprofils als zweite Anzeige auf dem Monitor angezeigt werden.

In dem dritten Schritt des zweiten Verfahrens kann geeigneter Weise ebenfalls ein entsprechendes, eine automatische Korrektur kennzeichnendes, Signal ausgegeben werden, das ebenfalls auf dem Monitor angezeigt werden kann. Die angezeigte, automatische Korrektur und die Zusammenschau der Topografie mit Dickenmittelwerten ausgewählter Spuren eines Messprofils oder extrapolierten Querprofils kann wie die Topografie geeigneter Weise außerdem insbesondere in einer Datenbank abrufbar gespeichert werden.

In einem vierten Schritt des zweiten Verfahrens kann die erste Anzeige und/oder die zweite Anzeige von einer Bedienperson bewertet werden.

Die Bewertung in dem vierten Schritt gestattet einer Bedienperson, falls erforderlich, in einem fünften Schritt des zweiten Verfahrens insbesondere einen Streukopfschieber eines Streukopfes der Formstation zur Optimierung des Betriebs der Anlage und der Topografie einzustellen und dabei eine manuelle Korrektur des Betriebs der Anlage und der Topografie des Spänekuchens durchzuführen.

Die Bewertung in dem vierten Schritt gestattet einer Bedienperson, falls erforderlich, außerdem in dem fünften Schritt die Durchführung des zweiten Schritts des zweiten Verfahrens mit einer automatischen Korrektur des Betriebs der Anlage und der Topografie des Spänekuchens zu veranlassen.

Das zweite Verfahren gestattet mit den vorstehenden Schritten eine Überwachung und Steuerung des Betriebs einer Anlage zur kontinuierlichen Spanplattenherstellung mit einer Formstation zur Bildung eines Spänekuchens auf einem Stahlband zur Zuführung des Spänekuchens zu einer Pressanlage, wobei die Überwachung und Steuerung vorteilhaft sowohl maschinengestützt als auch manuell durchführbar ist. Insbesondere mit dem zweiten Verfahren kann der Betrieb der Anlage und die Qualität der hergestellten Spanplatten vorteilhaft optimiert werden.

Darüber hinaus kann mittels der Speicherung, insbesondere der bei der Durchführung des zweiten Verfahrens relevanten Messdaten und weiteren Daten, die Durchführung des Verfahrens und der Betrieb der Anlage vorteilhaft protokolliert werden, wobei die gespeicherten Messdaten und weiteren Daten außerdem zur Optimierung des weiteren Betriebs der Anlage zur Verfügung stehen. Wie vorstehend beschrieben, kann nämlich in Schritt drei des ersten Verfahrens ein Vergleich einer aktuell gemessenen Topografie eines Messprofils des Spänekuchens und/oder der gemessenen Topografie des Profils auf ein Querprofil quer und insbesondere senkrecht zur Transportrichtung des Spänekuchens extrapoliert mit wenigstens einer gespeicherten Topografie durchgeführt werden. Natürlich stehen die gespeicherten Messdaten und weiteren Daten geeigneter Weise auch für weitere, insbesondere auch statistische, Auswertungen zur Verfügung.

Mittels der vorstehend beschriebenen Lasermesseinrichtung und dem ersten und zweiten Verfahren ist die Möglichkeit geschaffen, bei einer Spanplattenproduktion mit minimalem Materialeinsatz von Leim und Spänen, ein hochqualitatives Produkt zu erzeugen. Darüber hinaus kann der Betrieb einer Anlage zur kontinuierlichen Spanplattenherstellung optimiert werden, wobei durch Stillstandzeiten verursachte Produktionsausfälle weitgehend vermieden werden können und gleichzeitig eine Erhöhung der Produktionsgeschwindigkeit erzielt werden kann.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Nicht alle Bezugszeichen sind in allen Figuren dargestellt. Im Einzelnen zeigt:
- Fig. 1: eine schematische Darstellung einer Formstation einer Anlage nach einer Ausführung der Erfindung;
- Fig. 2A: eine schematische Darstellung einer Vorrichtung zur Prüfung eines sich kontinuierlich bewegenden Spänekuchens mit einem auf einem Stahlband angeordneten Spänekuchen;
- Fig. 2B: einen Ausschnitt des Spänekuchens von Fig. 2A aus einer anderen Perspektive, mit einem von der Vorrichtung von Fig. 2A vermessenen Profil des Spänekuchens;
- Fig. 2C: das Messprofil von Fig. 2B zusammen mit einem weiteren Messprofil einer weiteren Vorrichtung zur Prüfung eines sich kontinuierlich bewegenden Spänekuchens;
- Fig. 3A: eine grafische Darstellung einer von der Vorrichtung von Fig. 2A gemessenen Topografie;
- Fig. 3B: die Topografie von Fig. 3A zusammen mit Dickenmittelwerten vorbestimmter Spuren; und
- Fig. 4: jeweils in einem Flussdiagramm, Schritte eines Verfahrens zur Prüfung eines sich kontinuierlich bewegenden Spänekuchens und eines Verfahrens zur Überwachung und Steuerung des Betriebs einer Anlage zur kontinuierlichen Spanplattenherstellung nach einer Ausführung der Erfindung.

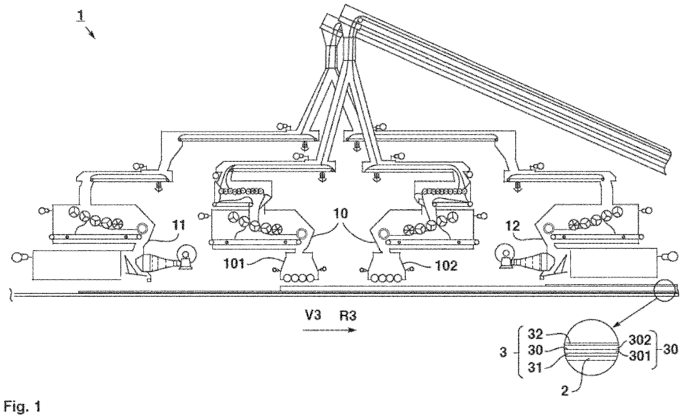

Fig. 1 zeigt eine schematische Darstellung einer Formstation 1 einer Anlage zur kontinuierlichen Spanplattenherstellung mit der Formstation 1 zur Bildung eines Spänekuchens 3 auf einem Stahlband 2 zur Zuführung des Spänekuchens 3 zu einer Pressanlage und mit einer Steuereinrichtung zum Betrieb der Anlage nach einer Ausführung der Erfindung.

Die Formstation 1 weist einen ersten und zweiten Streukopf 10 zur Streuung von beleimten Spänen zur Ausbildung einer unteren 301 und oberen 302 Schicht einer mittleren Schicht 30 des Spänekuchens 3 und jeweils einen Streukopf 11 und 12 zur Streuung von beleimten vergleichsweise kleineren Spänen zur Ausbildung einer unteren 31 und oberen 32 Deckschicht auf. Die Formstation 1 ist derart eingerichtet, dass die Streuköpfe 10, 11 und 12 kontinuierlich beleimte Späne für die Schichten 30, 31 und 32 auf das ebenfalls kontinuierlich, mit einer geeigneter Weise konstanten Geschwindigkeit V3 von geeigneter Weise 150 mm/s bis 650 mm/s in Transportrichtung R3 laufende Band 2, streuen, das sich bis zu einer Pressanlage erstreckt, deren Produktionsgeschwindigkeit der Geschwindigkeit V3 entspricht und insbesondere auch mit der Plattendicke variiert.

Der erste und zweite Streukopf 10 weist zur Einstellung der Streuung der unteren Schicht 301 und der oberen Schicht 302 der mittleren Schicht 30 jeweils einen Streukopfschieber 101 und 102 auf, wobei die ausgestreute Menge an Spänen jeweils dosierbar ist. Geeigneter Weise können die Streukopfschieber 101 und 102 mechanisch verstellt werden, wonach jeweils eine für eine vorbestimmte Spanplatte geeignete Streuung erfolgen kann. Geeigneter Weise ist mindestens einer der Streukopfschieber 101 und 102 außerdem elektrisch verstellbar eingerichtet, sodass eine automatische Einstellung der Streuung möglich ist. Es ist klar, dass vorteilhaft beide Streukopfschieber 101 und 102 derart ausgebildet und eingerichtet sein können, dass sie sowohl mechanisch als auch elektrisch verstellbar sind. Es ist außerdem klar, dass eine abgewandelte Formstation 1 neben den Streukopfschiebern 101 und 102 des ersten und zweiten Streukopfes 10 zur Regulierung der mittleren Schicht 30 geeigneter Weise auch jeweils einen für die Streuköpfe 11 und 12 vorgesehenen Streukopfschieber zur Regulierung der unteren 31 und oberen 32 Deckschicht aufweisen kann.

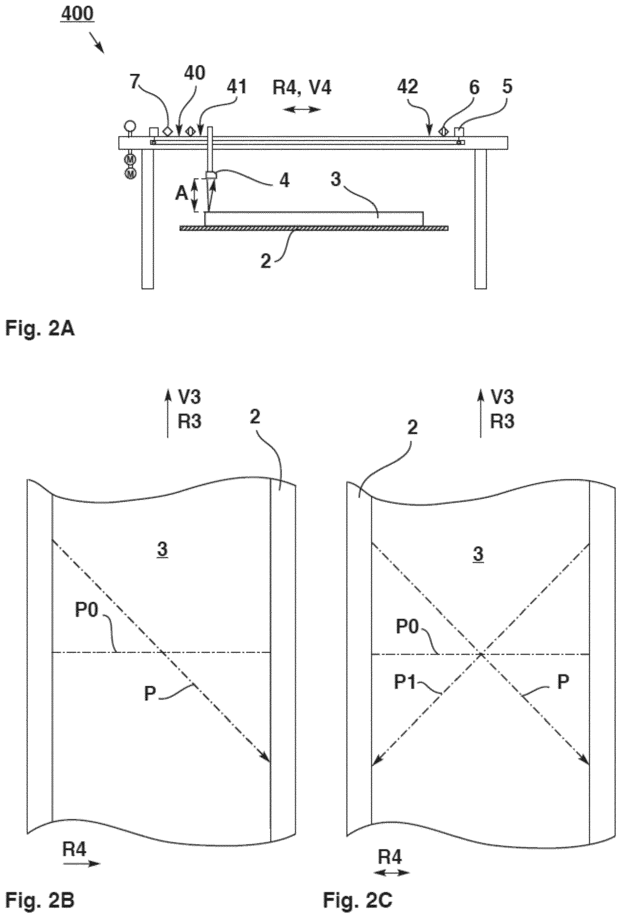

Fig. 2A zeigt eine schematische Darstellung einer Vorrichtung 400 zur Prüfung eines sich kontinuierlich bewegenden Spänekuchens 3, zusammen mit einem auf einem Stahlband 2 angeordneten Spänekuchen 3, der in einer für die Prüfung des Spänekuchens 3 geeigneten Position zu der Vorrichtung 400 angeordnet ist. In der Zeichnung ist das Stahlband 2 und der Spänekuchen 3 in einem Querschnitt mit Blick in Transportrichtung R3 des Stahlbands 2 und des Spänekuchens 3 dargestellt.

Bei der Vorrichtung 400 handelt es sich geeigneter Weise um eine Wegmesseinrichtung 400 mit einem Wegsensor 4, die auf dem Prinzip der Laufzeitmessung beruht, und die insbesondere eine Lasermesseinrichtung 400 mit einem Lasersensor 4 sein kann. Die Lasermesseinrichtung 400 kann einen für eine Laufzeitmessung oder für ein Phasen- oder Frequenzlaufverfahren geeigneten Laser 4 und insbesondere einen Triangulationslaser 4 aufweisen. Der Triangulationslaser 4 ist besonders vorteilhaft, nachdem der Triangulationslaser 4 ein rein geometrisches Messverfahren gestattet und geeigneter Weise in einem Abstand A von 100 mm bis 500 mm und vorteilhaft 200 mm bis 300 mm und besonders vorteilhaft 250 mm von dem Spänekuchen 3 angeordnet sein kann und dabei eine Auflösung von geeigneter Weise 0,20 mm bis 0,30 mm und vorteilhaft 0,25 mm aufweisen kann.

Der Laser 4 ist geeigneter Weise in einer Richtung R4 quer zur Transportrichtung R3 verfahrbar angeordnet, wofür die Lasermesseinrichtung 400 einen elektrischen Antrieb 5 aufweist, der geeigneter Weise derart eingerichtet ist, dass der Laser 4 aus einer Ruheposition 40 in eine erste Messposition 41 bis zu einer zweiten Messposition 42 verfahrbar ist, die derart angeordnet sind, dass mittels des Lasers 4 in der ersten 41 und zweiten 42 Messposition jeweils auch ein zu einem seitlichen Rand des Spänekuchens 3 benachbarter Bereich des Stahlbands 2 vermessen wird. Auf diese Weise ist vorteilhaft sichergestellt, dass von dem Laser 4 ein vollständiges Messprofil P des Spänekuchens 3 erfasst wird, das sich von dessen einem seitlichen Rand zu dessen gegenüberliegenden seitlichen Rand erstreckt.

Die Lasermesseinrichtung 400 kann zur Verfahrung des Lasers 4 zu den Positionen 40, 41 und 42 beispielsweise eine geeignete schienenartige Führung aufweisen, an der der Laser 4 auf geeignete Weise verfahrbar angeordnet sein kann. Bei dem Antrieb 5 kann es sich wie vorstehend gesagt geeigneter Weise um einen elektrischen Antrieb 5 und beispielsweise um einen Schrittmotor 5 handeln, der über eine geeignete Mechanik mit dem Laser 4 zusammenwirken kann, und der geeigneter Weise außerdem eine Einrichtung zur Erfassung der Drehwinkel seiner Antriebseinheit aufweisen kann, wonach mittels des Antriebs 5 vorteilhaft eine Position des Lasers 4 signal- und datentechnisch erfassbar ist. Alternativ kann eine direkte Positionsbestimmung des Lasers 4 etwa mittels einer benachbart zu dem Antrieb 5 angeordneten optischen oder mechanischen geeigneten Messeinrichtung durchgeführt werden.

Der Antrieb 5 ist geeigneter Weise derart eingerichtet, dass die Geschwindigkeit V4, mit der der Laser 4 in Richtung R4 verfahren wird, geeigneter Weise konstant ist und zwischen 10 mm/s und 500 mm/s und vorteilhaft zwischen 35 mm/s und 350 mm/s beträgt, wobei die Lasermesseinrichtung 400 darüber hinaus vorteilhaft derart eingerichtet ist, dass bei einer Verfahrgeschwindigkeit in einem Bereich von etwa 345 mm/s, drei Messungen pro mm durchgeführt werden und bei einer Verfahrgeschwindigkeit in einem Bereich von etwa 15 mm/s, sieben Messungen pro mm durchgeführt werden. Wie eingangs erwähnt kann die Verfahrgeschwindigkeit V4 des Wegsensors 4 insbesondere vorteilhaft mittels absolutem oder relativen Regelkreis kontinuierlich auch korrespondierend mit der Transportgeschwindigkeit V3 des Spänekuchens 3 auf dem Stahlband 2 eingestellt werden.

Zur Funktionssicherheit des Lasers 4 weist die Lasermesseinrichtung 400 außerdem eine pneumatische Reinigungseinheit 7 auf, die geeigneter Weise benachbart zu der Ruheposition 40 des Lasers 4 angeordnet sein kann, und die derart eingerichtet ist, dass die Optik des Lasers 4, insbesondere von Staub, gereinigt wird. Die Lasermesseinrichtung 400 kann zur zuverlässigen Verfahrung des Lasers 4 außerdem geeignete Endschalter 6 aufweisen.

Wie vorstehend gesagt, ist die Anzahl der Messungen pro mm und damit auch die Messgenauigkeit von der Verfahrgeschwindigkeit V4 des Lasers 4 abhängig, die vorteilhaft zwischen 35 mm/s und 350 mm/s liegen kann, wobei die Anzahl der Messungen und damit die Messgenauigkeit mit zunehmender Geschwindigkeit abnimmt. Andererseits ist wünschenswert, für beide seitlichen Ränder des Spänekuchens 3, Messwerte eines möglichst zeitgleichen Auftrags von Spänen zu erhalten. Nachdem nun beim Verfahren des Lasers 4 mit der Geschwindigkeit V4 in Richtung R4 außerdem der Spänekuchen 3 auf dem Stahlband 2 mit der Geschwindigkeit V3 in Richtung R3 transportiert wird, misst der Laser 4 ein Profil P, das sich von einem seitlichen Rand zu dem anderen seitlichen Rand des Spänekuchens 3 erstreckt.

Hierzu zeigt Fig. 2B einen Ausschnitt des Spänekuchens 3 von Fig. 2A von oben, mit dem von dem Laser 4 von Fig. 2A vermessenen Profil P des Spänekuchens 3, gemessen mit einer vorbestimmten geeigneter Weise konstanten Verfahrgeschwindigkeit V4, die beispielhaft im Wesentlichen der Transportgeschwindigkeit V3 entsprechen kann, wonach sich ein vorteilhaft im Wesentlichen lineares Messprofil P ergibt, das den Spänekuchen 3 in einem Winkel α von etwa 45° überquert. Es ist klar, dass die Verfahrgeschwindigkeit V4 des Lasers 4 auch unabhängig von der geeigneter Weise ebenfalls konstanten Transportgeschwindigkeit V3 festgelegt werden kann, wobei das Profil P auch eine nicht lineare Kurve aufweisen kann.

Einerseits ist nun wie vorstehend dargelegt für eine möglichst hohe Messgenauigkeit wünschenswert, den Laser 4 möglichst langsam zu verfahren. Andererseits vergrößert sich dadurch jedoch der zeitliche Abstand der Messungen an den seitlichen Rändern des Spänekuchens 3, die darüber hinaus in Transportrichtung R3 voneinander beabstandet sind. Auch aus diesem Grund und insbesondere auch für eine möglichst einfache Lokalisierung und zeitliche Zuordnung der Messwerte können die Messungen mittels des Lasers 4 vorteilhaft wie in Fig. 2B dargestellt und vorstehend beschrieben bei einer Verfahrgeschwindigkeit V4 durchgeführt werden, die im Wesentlichen der Transportgeschwindigkeit V3 des Spänekuchens 3 auf dem Stahlband 2 entspricht.

Der Laser 4, der Antrieb 5, die Endschalter 6 und die pneumatische Reinigungseinheit 7 der Lasermesseinrichtung 400 können geeigneter Weise mit einer Steuereinrichtung der Anlage zur kontinuierlichen Spanplattenherstellung mit der Formstation 1 zur Bildung des Spänekuchens 3 auf dem Stahlband 2 zur Zuführung des Spänekuchens 3 zu der Pressanlage signal- und datentechnisch verbunden sein. Die Lasermesseinrichtung 400 oder die Anlage kann darüber hinaus einen ebenfalls mit der Steuereinrichtung signal- und datentechnisch verbundenen Monitor zur Visualisierung der von der Lasermesseinrichtung 400 erfassten Messwerte aufweisen.

Die gemessenen Topografiewerte T des Messprofils P können hierbei insbesondere auch für eine nachfolgend beschriebene grafische Darstellung der Topografie T außerdem vorteilhaft auf das Profil P0 des Spänekuchens 3 quer und insbesondere senkrecht zur Transportrichtung R3 extrapoliert werden.

Die Lasermesseinrichtung 400 ist in der Anlage zur kontinuierlichen Spanplattenherstellung geeigneter Weise nach der Formstation 1 vorgesehen und kann zum Beispiel in einem Abstand von 10 m bis 20 m von der Formstation 1 beabstandet angeordnet sein.

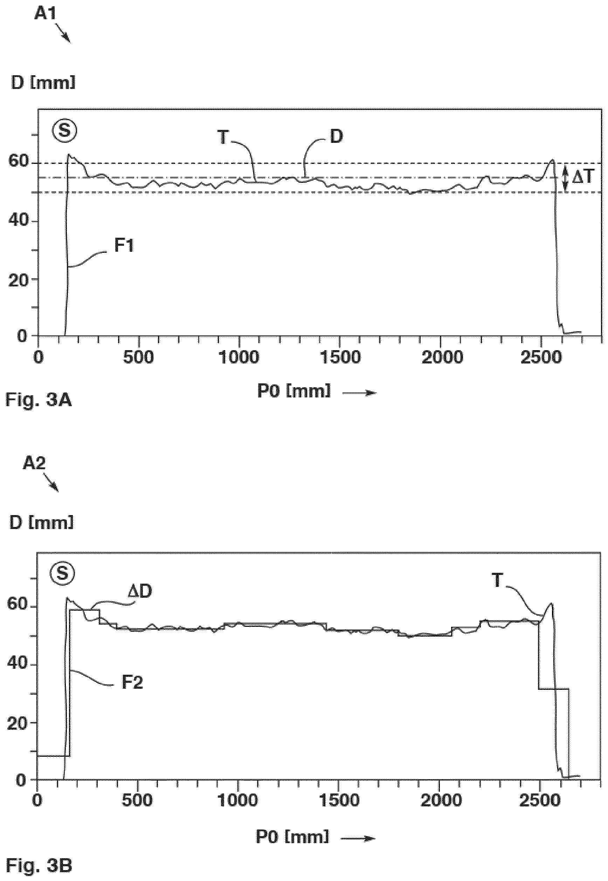

Fig. 2C zeigt den Spänekuchen 3 von Fig. 2B mit einem weiteren Messprofil P1 einer weiteren Lasermesseinrichtung 400 zur Prüfung des Spänekuchens 3, die benachbart zu einer ersten Lasermesseinrichtung 400 von Fig. 3A angeordnet ist, und die einen weiteren Laser 4 aufweist, der ebenfalls mit der Geschwindigkeit V4 aber in Gegenrichtung zu der Richtung des Lasers 4 von Fig. 2A und B verfahren wird. Mittels dieser Anordnung ist insbesondere eine wünschenswert hochauflösende Extrapolation beider Messprofile P und P1 auf das Profil P0 möglich.

Fig. 3A zeigt eine grafische Darstellung einer von der Lasermesseinrichtung 400 von Fig. 2A gemessenen Topografie T des Spänekuchens 3 zusammen mit einer vorbestimmten optimalen Dicke D des Spänekuchens und einem vorbestimmten Toleranzbereich ΔT, und Fig. 3B zeigt die Topografie T von Fig. 3A in Zusammenschau mit Dickenmittelwerten ΔD vorbestimmter Spuren insbesondere des extrapolierten Profils P0 quer zur Transportrichtung R3.

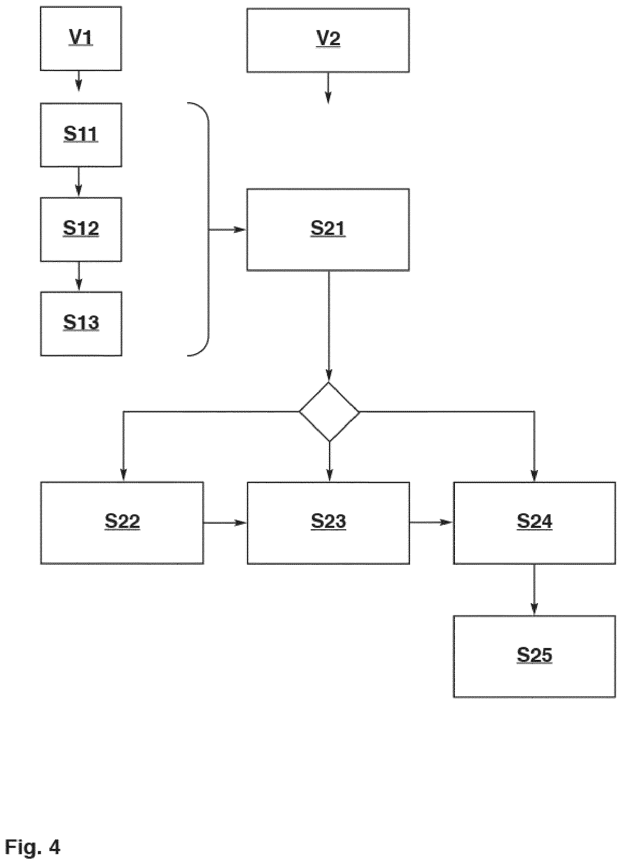

Die grafische Darstellung von Fig. 3A kann in einem zweiten Schritt S12 eines nachfolgend unter Bezugnahme auf Fig. 4 beschriebenen Verfahrens V1 nach einer Ausführung der Erfindung als erste Anzeige A1 einer gemessenen Topografie T auf einem Monitor angezeigt werden, und die grafische Darstellung von Fig. 3B kann in einem dritten Schritt S23 eines nachfolgend unter Bezugnahme auf Fig. 4 beschriebenen Verfahrens V2 nach einer Ausführung der Erfindung als zweite Anzeige A2 einer gemessenen Topografie T auf einem Monitor angezeigt werden.

In den grafischen Darstellungen von Fig. 3A und B wird die gemessene Topografie T als Kurve gegen das extrapolierte Profil P0 in einer ersten Farbe F1 aufgetragen, wobei der Flächeninhalt der von der Topografie T und der P0 Achse eingeschlossenen Fläche ebenfalls in der ersten Farbe F1 mit abgeschwächter Intensität dargestellt wird.

Die Dickenmittelwerte ΔD werden geeigneter Weise ebenfalls als Kurve in einer zweiten Farbe F2 dargestellt, und der Flächeninhalt der von der Kurve der Dickenmittelwerte ΔD und der P0 Achse eingeschlossenen Fläche werden ebenfalls in der zweiten Farbe F2 mit abgeschwächter Intensität dargestellt. Die vorstehende Darstellung der Topografie T und der Dickenmittelwerte ΔD mit der ersten F1 und zweiten F2 Farbe sowie die Flächen mit den abgeschwächten Intensitäten der Farben F1 und F2 gestatten eine besonders deutliche Visualisierung der Topografie T und der Dickenmittelwerte ΔD.

Die vorbestimmten Spuren korrespondieren geeigneter Weise mit der Breite eines Streukopfschiebers und können insbesondere eine Spurbreite von 50 mm bis 400 mm und vorteilhaft etwa 100 mm bis 200 mm aufweisen.

Die grafischen Darstellungen von Fig. 3A und B sind vorteilhaft für die erste A1 und zweite A2 Anzeige auf einem Monitor, insbesondere zur Bewertung der gemessenen Topografie T von einer Bedienperson, vorgesehen. Geeigneter Weise kann auf dem Monitor jeweils neben der Anzeige der Topografie T außerdem ein Signal S angezeigt werden, das mit einer hard- und softwaregestützten Auswertung der gemessenen Topografie T korrespondiert. Der Monitor kann außerdem ein Touch-Screen Monitor sein, auf dem neben dem Signal S außerdem maschinengestützte Vorschläge zur Optimierung des Betriebs der Formstation 1 als eine Reaktion auf die dargestellte Topografie T insbesondere mittels mit der Topografie T korrespondierender berührungssensitiver, bedienbarer Felder dargestellt werden.

Die vorstehenden grafischen Darstellungen können besonders vorteilhaft in einem nachfolgend beschriebenen zweiten Verfahren V2 zur Überwachung und zur Steuerung einer Anlage zur kontinuierlichen Spanplattenherstellung mit der Formstation 1 zur Bildung des Spänekuchens 3 auf einem Stahlband 2 zur Zuführung des Spänekuchens 3 zu einer Pressanlage und mit einer Steuereinrichtung zum Betrieb der Anlage verwendet werden.

Fig. 4 zeigt hierzu in einem Flussdiagramm zunächst Schritte eines ersten Verfahrens V1 zur Prüfung eines sich kontinuierlich bewegenden Spänekuchens 3, der zur Spanplattenherstellung auf einem Stahlband 2 einer kontinuierlichen Pressanlage zugeführt wird, wobei in dem ersten Verfahren V1 in einem ersten Schritt S11 die Topografie T des Spänekuchens 3 kontinuierlich entlang eines Messprofils P des Spänekuchens 3 mittels eines Lasermessverfahrens gemessen wird. Bei dem Profil P kann es sich geeigneter Weise um ein vorstehend unter Bezugnahme auf Fig. 2B beschriebenes Messprofil P handeln.

In einem zweiten Schritt S12 des Verfahrens V1 kann die gemessene Topografie T des Profils P des Spänekuchens 3 oder die gemessene Topografie T des Messprofils P auf ein Profil P0 quer und insbesondere senkrecht zur Transportrichtung R3 des Spänekuchens 3 extrapoliert als erste Anzeige A1 auf einem Monitor, zusammen mit weiteren zur Kennzeichnung der Topografie T und des Spänekuchens 3 geeigneten Daten, angezeigt werden. Außerdem kann in dem zweiten Schritt S12 das Messprofil P oder das extrapolierte Profil P0, zusammen mit den weiteren zur Kennzeichnung der Topografie T und des Spänekuchens 3 geeigneten Daten, gespeichert werden.

Bei den weiteren Daten kann es sich um messtechnisch und verfahrenstechnisch relevante Daten handeln, nämlich um Einstellungen einer verwendeten Lasermesseinrichtung 400, wie beispielsweise Merkmale des verwendeten Lasers 4, dessen Abstand A, Auflösung, Verfahrgeschwindigkeit V4, etc., sowie um weitere Parameter, wie beispielsweise Temperatur, Luftfeuchtigkeit, etc., die von geeigneten Sensoren bereitgestellt und abgerufen werden können.

Die weiteren Daten können außerdem produktionsrelevante Daten und Vorgaben umfassen, wie verwendetes Material zur Bereitstellung des Spänekuchens 3, Dicke der Spanplatte, Transportgeschwindigkeit R3 des Bands 2, etc. Darüber hinaus können allgemeine und auch betriebswirtschaftliche Daten, wie Datum und Uhrzeit, Auftragsnummer, Bedienperson der Anlage, etc. als weitere Daten zusammen mit der Topografie T aufgezeichnet werden.

Es ist klar, dass neben oder an Stelle der Daten der Topografie T des Messprofils P natürlich auch die Daten des extrapolierten Profils P0 aufgezeichnet werden können, wobei die Daten für deren weitere Verwendung geeigneter Weise in einer Datenbank abgelegt werden können.

In einem dritten Schritt S13 des Verfahrens V1 wird ein Vergleich der gemessenen Topografie T des Spänekuchens 3 oder der gemessenen Topografie T des Messprofils P auf ein Profil P0 quer und insbesondere senkrecht zur Transportrichtung R3 des Spänekuchens 3 extrapoliert, mit einer vorbestimmten Topografie T und/oder mit wenigstens einer gespeicherten Topografie T und/oder mit einer vorbestimmten optimalen Dicke D und/oder mit einem vorbestimmten Toleranzbereich ΔT durchgeführt.

Geeigneter Weise wird in Schritt S13 außerdem eine hard- und softwaregestützte Bewertung des vorstehenden Vergleichs durchgeführt. Die Bewertung des Vergleichs der gemessenen Topografie T mit der vorbestimmten und/oder gespeicherten Topografie T und/oder mit der vorbestimmten Dicke D und/oder mit dem Toleranzbereich ΔT kann geeigneter Weise als ein Signal S ausgegeben werden, das auf dem Monitor angezeigt und/oder gespeichert werden kann. Bei dem Signal S kann es sich außerdem um ein Steuersignal handeln, das von einer Steuereinrichtung anlagentechnisch, insbesondere in dem nachfolgend beschriebenen Verfahren V2, verwendet werden kann.

In dem Verfahren V1 kann geeigneter Weise eine unter Bezugnahme auf Fig. 2A beschriebene Lasermesseinrichtung 400 verwendet werden, deren Optik geeigneter Weise in regelmäßigen Abständen gereinigt werden kann.

Fig. 4 zeigt hierzu in einem Flussdiagramm außerdem Schritte eines zweiten Verfahrens V2 zur Überwachung und Steuerung des Betriebs einer Anlage zur kontinuierlichen Spanplattenherstellung mit einer Formstation 1 zur Bildung eines Spänekuchens 3 auf einem Stahlband 2 zur Zuführung des Spänekuchens 3 zu einer Pressanlage und mit einer Steuereinrichtung zum Betrieb der Anlage und mit einem Monitor zur Anzeige des Betriebszustands der Anlage. Die Formstation 1 zur Bildung des Spänekuchens 3 der Anlage weist vorteilhaft wenigstens einen Streukopf 10 auf, der mittels eines manuell und/oder elektrisch verstellbaren Streukopfschiebers 101, 102 einstellbar ist.

In einem ersten Schritt S21 des Verfahrens V2 zur Überwachung und Steuerung des Betriebs der Anlage werden geeigneter Weise Schritt eins S11, Schritt zwei S12 und Schritt drei S13 des vorstehend beschriebenen Verfahrens V1 durchgeführt. Außerdem kann in dem Verfahren V2, wie auch in dem Verfahren V1, geeigneter Weise eine unter Bezugnahme auf Fig. 2A beschriebene Lasermesseinrichtung 400 verwendet werden.

In einem zweiten Schritt S22 des Verfahrens V2 kann, unter Berücksichtigung der in Schritt S13 durchgeführten Bewertung der Topografie T, die Steuereinrichtung verwendet werden, um einen Streukopfschieber 101, 102 eines Streukopfes 10 der Formstation 1 zur Optimierung des Betriebs der Anlage und der Topografie T hard- und softwaregestützt einzustellen, wobei eine automatische Korrektur des Betriebs der Anlage und der Topografie T des Spänekuchens 3 durchgeführt werden kann. Hierbei kann in dem zweiten Schritt S22 des Verfahrens V2 geeigneter Weise das Signal S von der Steuereinrichtung zur Einstellung eines Streukopfschiebers 101, 102 verwendet werden.

In einem dritten Schritt S23 des Verfahrens V2 kann eine in dem zweiten Schritt S12 des Verfahrens V1 durchgeführte Bewertung des Spänekuchens 3 als zweite Anzeige A2 einer unter Bezugnahme auf Fig. 3B beschriebenen Zusammenschau der Topografie T mit Dickenmittelwerten ΔD ausgewählter Spuren eines Messprofils P oder extrapolierten Profils P0 auf dem Monitor angezeigt werden. In Schritt S23 kann geeigneter Weise ebenfalls ein entsprechendes, eine automatische Korrektur kennzeichnendes Signal S ausgegeben werden, das ebenfalls auf dem Monitor angezeigt werden kann. Die angezeigte, automatische Korrektur und die Zusammenschau der Topografie T mit Dickenmittelwerten ΔD ausgewählter Spuren eines Messprofils P oder extrapolierten Profils P0 kann wie die Topografie T geeigneter Weise in einer Datenbank abrufbar gespeichert werden.

In einem vierten Schritt S24 des Verfahrens V2 kann die erste Anzeige A1 und/oder die zweite Anzeige A2 von einer Bedienperson bewertet werden, wobei die Bedienperson in einem fünften Schritt S25 einen Streukopfschieber 101, 102 eines Streukopfes 10 der Formstation 1 zur Optimierung des Betriebs der Anlage und der Topografie T einstellen kann und eine manuelle Korrektur des Betriebs der Anlage und der Topografie T des Spänekuchens 3 durchführen kann, und/oder die Durchführung des zweiten Schritts S22 mit einer automatischen Korrektur des Betriebs der Anlage und der Topografie T des Spänekuchens 3 veranlassen kann. Beispielsweise kann hierfür der vorstehende für die Anzeige A1 und A2 verwendete Monitor als Touch-Screen Monitor ausgebildet sein, und die Anzeige A1 und/oder A2 jeweils geeignete visuelle Bedienfelder für die Veranlassung der Durchführung des zweiten Schritts S22 aufweisen.

Das Verfahren V2 gestattet mit den vorstehenden Schritten S21, S22, S23, S24 und S25 eine Überwachung und Steuerung des Betriebs einer Anlage zur kontinuierlichen Spanplattenherstellung mit einer Formstation 1 zur Bildung eines Spänekuchens 3 auf einem Stahlband 2 zur Zuführung des Spänekuchens 3 zu einer Pressanlage, wobei die Überwachung und Steuerung vorteilhaft sowohl maschinengestützt als auch manuell durchführbar ist. Mit dem Verfahren V2 kann der Betrieb der Anlage und die Qualität der hergestellten Spanplatten vorteilhaft optimiert werden.

Darüber hinaus kann mittels der Speicherung, insbesondere der bei der Durchführung des Verfahrens V2 relevanten Messdaten und weiteren Daten, die Durchführung des Verfahrens und der Betrieb der Anlage vorteilhaft protokolliert werden, wobei die gespeicherten Messdaten und weiteren Daten außerdem zur Optimierung des weiteren Betriebs zur Verfügung stehen. Wie vorstehend beschrieben, kann nämlich in Schritt S13 ein Vergleich einer aktuell gemessenen Topografie T eines Messprofils P des Spänekuchens 3 oder der gemessenen Topografie T des Profils P auf ein Profil P0 quer und insbesondere senkrecht zur Transportrichtung R3 des Spänekuchens 3 extrapoliert mit wenigstens einer gespeicherten Topografie durchgeführt werden. Natürlich stehen die gespeicherten Messdaten und weiteren Daten geeigneter Weise auch für weitere, insbesondere auch statistische, Auswertungen zur Verfügung.

### Bezugszeichen

- 1: Formstation
- 10, 11, 12: Streukopf
- 101, 102: Streukopfschieber

- 2: Stahlband

- 3: Spänekuchen
- 30: Mittelschicht
- 301, 302: untere, obere Mittelschicht
- 31, 32: Deckschicht

- 400: Wegmesseinrichtung, Lasermesseinrichtung
- 4: Wegsensor, Lasersensor, Laser
- 40, 41, 42: Position

- 5: Antrieb, Schrittmotor
- 6: Endschalter
- 7: Reinigungseinheit

- A: Abstand
- A1, A2: Anzeige

- D: Dicke, optimale vorbestimmte Dicke
- ΔD: Dickenmittelwert

- F1, F2: Farbe
- R3, R4: Richtung
- P, P0, P1: Profil, Messprofil, Querprofil
- S: Signal
- S11, S12, S13, S21, S22, S23, S24, S25: Schritt

- T: Topografie
- ΔT: Toleranzbereich

- V1, V2: Verfahren
- V3, V4: Geschwindigkeit
- α: Winkel

### zitierte Literatur

zitierte Patentliteratur
DE 101 60 398 A1
WO 2007/137391 A1

## Patentansprüche

1. Verfahren (V1) zur Prüfung eines sich kontinuierlich bewegenden Spänekuchens (3), der zur Spanplattenherstellung auf einem Stahlband (2) einer kontinuierlichen Pressanlage zugeführt wird, **dadurch gekennzeichnet, dass**
- in einem ersten Schritt (S11) eine Topografie (T) des Spänekuchens (3) kontinuierlich entlang eines Messprofils (P) des Spänekuchens (3) quer zur Transportrichtung (R3) des Spänekuchens (3) auf dem Stahlband (2) mittels eines Wegmessverfahrens gemessen wird, und
- in einem zweiten Schritt (S12) die gemessene Topografie (T) des Profils (P) des Spänekuchens (3) oder die gemessene Topografie (T) des Profils (P) auf ein Profil (P0) quer und insbesondere senkrecht zur Transportrichtung (R3) des Spänekuchens (3) extrapoliert als erste Anzeige (A1) auf einem Monitor angezeigt wird, und
- in einem dritten Schritt (S13) ein Vergleich der gemessenen Topografie (T) des Profils (P) des Spänekuchens (3) oder der gemessenen Topografie (T) des Profils (P) auf ein Profil (P0) quer und insbesondere senkrecht zur Transportrichtung (R3) des Spänekuchens (3) extrapoliert mit einer vorbestimmten Topografie und/oder mit wenigstens einer gespeicherten Topografie und/oder mit einer vorbestimmten optimalen Dicke (D) und/oder mit einem vorbestimmten Toleranzbereich (ΔT) durchgeführt wird.

2. Verfahren (V1) nach Anspruch 1, **dadurch gekennzeichnet, dass**
in dem zweiten Schritt (S12) die gemessene Topografie (T) des Profils (P) des Spänekuchens (3) oder die gemessene Topografie (T) des Profils (P) auf ein Profil (P0) quer und insbesondere senkrecht zur Transportrichtung (R3) des Spänekuchens (3) extrapoliert als erste Anzeige (A1) auf einem Monitor zusammen mit weiteren zur Kennzeichnung der Topografie (T) und des Spänekuchens (3) geeigneten Daten angezeigt wird und/oder das Profil (P) oder das extrapolierte Profil (P0) zusammen mit den weiteren zur Kennzeichnung der Topografie (T) und des Spänekuchens (3) geeigneten Daten gespeichert wird.

3. Verfahren (V1) nach Anspruch 1 oder 2, **dadurch gekennzeichnet, dass**
in dem dritten Schritt (S13) eine Bewertung der Topografie (T) durchgeführt wird, wobei
die Bewertung des Vergleichs der gemessenen Topografie (T) mit der vorbestimmten und/oder gespeicherten Topografie und/oder mit der vorbestimmten Dicke (D) und/oder mit dem Toleranzbereich (ΔT) als ein Signal (S) ausgegeben wird, das in der Anzeige (A1) auf dem Monitor angezeigt und/oder gespeichert werden kann.

4. Verfahren (V1) nach einem der vorhergehenden Ansprüche,
**dadurch gekennzeichnet, dass**
die Topografie (T) mit einer Genauigkeit von +/- 4,0 mm und vorteilhaft mit einer Genauigkeit von +/- 2,0 mm gemessen und auf dem Monitor dargestellt wird.

5. Verfahren (V1) nach einem der vorhergehenden Ansprüche,
**dadurch gekennzeichnet, dass**
eine Vorrichtung (400) zur Prüfung eines sich kontinuierlich bewegenden Spänekuchens (3), der zur Spanplattenherstellung auf einem Stahlband (2) einer kontinuierlichen Pressanlage zugeführt wird, verwendet wird, wobei
die Vorrichtung eine Wegmesseinrichtung (400) ist, die einen Wegsensor (4) aufweist, und die auf dem Prinzip der Laufzeitmessung beruht, wobei
der Wegsensor (4) zur Messung einer Topografie (T) des Spänekuchens (3) kontinuierlich entlang eines Messprofils (P) des Spänekuchens (3) quer zur Transportrichtung (R3) des Spänekuchens (3) auf dem Stahlband (2) verfahrbar angeordnet ist,
, wobei eine Geschwindigkeit (V4), mit der der Wegsensor (4) quer zu dem Spänekuchen (3) verfahren wird, geeigneter Weise zwischen 10 mm/s und 500 mm/s und vorteilhaft zwischen 35 mm/s und 350 mm/s beträgt.

6. Verfahren (V1) nach Anspruch 5, **dadurch gekennzeichnet, dass**
bei einer Verfahrgeschwindigkeit (V4) in einem Bereich von etwa 345 mm/s, drei Messungen pro mm durchgeführt werden und bei einer Verfahrgeschwindigkeit in einem Bereich von etwa 15 mm/s, sieben Messungen pro mm durchgeführt werden.

7. Verfahren (V1) nach Anspruch 5 oder 6, **dadurch gekennzeichnet, dass**
die Verfahrgeschwindigkeit (V4) mittels absoluten oder relativen Regelkreises kontinuierlich insbesondere auch korrespondierend mit der Transportgeschwindigkeit (V3) des Spänekuchens (3) auf dem Stahlband (2) insbesondere derart eingestellt wird, dass sich ein vorteilhaft im Wesentlichen lineares Messprofil (P) ergibt.

8. Anlage zur kontinuierlichen Spanplattenherstellung mit einer Formstation (1) zur Bildung eines Spänekuchens (3) auf einem Stahlband (2) zur Zuführung des Spänekuchens (3) zu einer Pressanlage und mit einer Steuereinrichtung zum Betrieb der Anlage und mit einem Monitor zur Anzeige des Betriebszustands der Anlage, wobei
die Formstation (1) zur Bildung des Spänekuchens (3) wenigstens einen Streukopf (10) aufweist, der mittels einem manuell und/oder elektrisch verstellbaren Streukopfschieber (101, 102) einstellbar ist, wobei
die Anlage eine Vorrichtung (400) zur Prüfung eines sich kontinuierlich bewegenden Spänekuchens (3), der zur Spanplattenherstellung auf einem Stahlband (2) einer kontinuierlichen Pressanlage zugeführt wird, aufweist, **dadurch gekennzeichnet, dass**
die Vorrichtung eine Wegmesseinrichtung (400) ist, die einen Wegsensor (4) aufweist, und die auf dem Prinzip der Laufzeitmessung beruht, wobei
der Wegsensor (4) zur Messung einer Topografie (T) des Spänekuchens (3) kontinuierlich entlang eines Messprofils (P) des Spänekuchens (3) quer zur Transportrichtung (R3) des Spänekuchens (3) auf dem Stahlband (2) verfahrbar angeordnet ist, und wobei die Wegmesseinrichtung (400) in Transportrichtung (R3) des Stahlbands (2) nach der Formstation (1) angeordnet ist.

9. Anlage nach Anspruch 8, **dadurch gekennzeichnet, dass** die Wegmesseinrichtung (400) eine Lasermesseinrichtung (400) ist und der Wegsensor (4) ein Lasersensor (4) ist, der insbesondere ein Triangulationslaser (4) sein kann, wobei
die Wegmesseinrichtung (400) eine Reinigungseinheit (7) zur regelmäßigen Reinigung einer Optik des Wegsensors (4) aufweisen kann, und wobei
die Wegmesseinrichtung (400) zum Verfahren des Wegsensors (4) quer zur Transportrichtung (R3) einen Antrieb (5) aufweist, und wobei
die Wegmesseinrichtung (400) derart eingerichtet ist, dass die Verfahrgeschwindigkeit (V4) mittels absolutem oder relativen Regelkreis kontinuierlich auch korrespondierend mit der Transportgeschwindigkeit (V3) des Spänekuchens (3) auf dem Stahlband (2) eingestellt werden kann.

10. Verfahren (V2) zur Überwachung und Steuerung des Betriebs einer Anlage nach Anspruch 8 oder 9,
**dadurch gekennzeichnet, dass**
in einem ersten Schritt (S21) des Verfahrens (V2) Schritt eins (S11), Schritt zwei (S12) und Schritt drei (S13) des Verfahrens (V1) nach einem der Ansprüche 1 bis 5 durchgeführt wird.

11. Verfahren (V2) nach Anspruch 10,
**dadurch gekennzeichnet, dass**
in einem zweiten Schritt (S22), unter Berücksichtigung der in Schritt (S13) durchgeführten Bewertung der Topografie (T), die Steuereinrichtung verwendet werden kann, insbesondere einen Streukopfschieber (101, 102) eines Streukopfes (10) der Formstation (1) zur Optimierung des Betriebs der Anlage und der Topografie (T) einzustellen, wobei eine automatische Korrektur des Betriebs der Anlage und der Topografie (T) des Spänekuchens (3) durchgeführt werden kann.

12. Verfahren (V2) nach Anspruch 10 oder 11,
**dadurch gekennzeichnet, dass**
in einem dritten Schritt (S23), unter Berücksichtigung der Bewertung der Topografie (T) des Spänekuchens (3) in Schritt drei (S13), eine automatische Korrektur der Topografie (T) des Spänekuchens (3) als Zusammenschau der Topografie (T) mit Dickenmittelwerten (ΔD) ausgewählter Spuren des Messprofils (P) oder extrapolierten Profils (P0) als zweite Anzeige (A2) auf dem Monitor angezeigt wird und/oder mit weiteren zur Kennzeichnung der Topografie (T) und des Spänekuchens (3) geeigneten Daten gespeichert wird, wobei ein Signal (S) ausgegeben werden kann, das auf dem Monitor angezeigt werden kann.

13. Verfahren (V2) nach einem der Ansprüche 10 bis 12,
**dadurch gekennzeichnet, dass**
in einem vierten Schritt (S24) die erste Anzeige (A1) und/oder die zweite Anzeige (A2) von einer Bedienperson bewertet wird, wobei die Bedienperson
in einem fünften Schritt (S25) insbesondere einen Streukopfschieber (101, 102) eines Streukopfes (10) der Formstation (1) zur Optimierung des Betriebs der Anlage und der Topografie (T) einstellen kann und eine manuelle Korrektur des Betriebs der Anlage und der Topografie (T) des Spänekuchens (3) durchführen kann, und/oder
die Durchführung des zweiten Schritts (S22) einer automatischen Korrektur des Betriebs der Anlage und der Topografie (T) des Spänekuchens (3) veranlassen kann.

## Claims

1. Method (V1) for inspecting a continuously moving chip cake (3) that is supplied to a continuous pressing installation on a steel belt (2) in order to produce chipboard, **characterized in that**,
- in a first step (S11), a topography (T) of the chip cake (3) is measured continuously along a measurement profile (P) of the chip cake (3) transverse to the transport direction (R3) of the chip cake (3) on the steel belt (2) using a distance measuring method, and
- in a second step (S12), the measured topography (T) of the profile (P) of the chip cake (3) or the measured topography (T) of the profile (P) extrapolated onto a profile (P0) transverse and in particular vertical to the transport direction (R3) of the chip cake (3) is displayed, as a first display (A1), on a monitor, and
- in a third step (S13), a comparison is performed between the measured topography (T) of the profile (P) of the chip cake (3) or the measured topography (T) of the profile (P) extrapolated onto a profile (P0) transverse and in particular vertical to the transport direction (R3) of the chip cake (3) and a predetermined topography and/or at least one stored topography and/or a predetermined optimum thickness (D) and/or a predetermined tolerance range (ΔT).

2. Method (V1) according to Claim 1, **characterized in that**,
in the second step (S12), the measured topography (T) of the profile (P) of the chip cake (3) or the measured topography (T) of the profile (P) extrapolated onto a profile (P0) transverse and in particular vertical to the transport direction (R3) of the chip cake (3) is displayed, as a first display (A1), on a monitor together with further data suitable for characterizing the topography (T) and the chip cake (3), and/or the profile (P) or the extrapolated profile (P0) is stored together with the further data suitable for characterizing the topography (T) and the chip cake (3).

3. Method (V1) according to Claim 1 or 2, **characterized in that**,
in the third step (S13), the topography (T) is assessed, wherein
the assessment of the comparison between the measured topography (T) and the predetermined and/or stored topography and/or the predetermined thickness (D) and/or the tolerance range (ΔT) is output in the form of a signal (S) that is able to be displayed in the display (A1) on the monitor and/or stored.

4. Method (V1) according to one of the preceding claims,
**characterized in that**
the topography (T) is measured and displayed on the monitor with an accuracy of +/-4.0 mm and advantageously with an accuracy of +/-2.0 mm.

5. Method (V1) according to one of the preceding claims,
**characterized in that**
a device (400) for inspecting a continuously moving chip cake (3) that is supplied to a continuous pressing installation on a steel belt (2) in order to produce chipboard is used, wherein
the device is a distance measuring apparatus (400) that has a distance sensor (4) and that is based on the time-of-flight measurement principle, wherein
the distance sensor (4), in order to measure a topography (T) of the chip cake (3), is arranged so as to be able to be moved continuously along a measurement profile (P) of the chip cake (3) transverse to the transport direction (R3) of the chip cake (3) on the steel belt (2), wherein
a speed (V4) at which the distance sensor (4) is moved transverse to the chip cake (3) is suitably between 10 mm/s and 500 mm/s and advantageously between 35 mm/s and 350 mm/s.

6. Method (V1) according to Claim 5, **characterized in that**,
in the case of a movement speed (V4) in a region of around 345 mm/s, three measurements are performed per mm and, in the case of a movement speed in a region of around 15 mm/s, seven measurements are performed per mm.

7. Method (V1) according to Claim 5 or 6, **characterized in that**
the movement speed (V4) is set continuously by way of absolute or relative closed-loop control, in particular also so as to correspond to the transport speed (V3) of the chip cake (3) on the steel belt (2), in particular so as to result in an advantageously essentially linear measurement profile (P).

8. Installation for continuous chipboard production having a forming station (1) for forming a chip cake (3) on a steel belt (2) for supplying the chip cake (3) to a pressing installation and having a control apparatus for operating the installation and having a monitor for displaying the operating state of the installation,
wherein
the forming station (1), in order to form the chip cake (3), has at least one strewing head (10) that is able to be set by way of a manually and/or electrically adjustable strewing head slide (101, 102), wherein
the installation has a device (400) for inspecting a continuously moving chip cake (3) that is supplied to a continuous pressing installation on a steel belt (2) in order to produce chipboard, **characterized in that**
the device is a distance measuring apparatus (400) that has a distance sensor (4) and that is based on the time-of-flight measurement principle, wherein
the distance sensor (4), in order to measure a topography (T) of the chip cake (3), is arranged so as to be able to be moved continuously along a measurement profile (P) of the chip cake (3) transverse to the transport direction (R3) of the chip cake (3) on the steel belt (2), and wherein the distance measuring apparatus (400) is arranged downstream of the forming station (1) in the transport direction (R3) of the steel belt (2).

9. Installation according to Claim 8, **characterized in that** the distance measuring apparatus (400) is a laser measuring apparatus (400) and the distance sensor (4) is a laser sensor (4), which may in particular be a triangulation laser (4), wherein
the distance measuring apparatus (400) may have a cleaning unit (7) for regularly cleaning optics of the distance sensor (4), and wherein
the distance measuring apparatus (400) has a drive (5) in order to move the distance sensor (4) transverse to the transport direction (R3), and wherein
the distance measuring apparatus (400) is configured such that the movement speed (V4) is able to be set continuously by way of absolute or relative closed-loop control also so as to correspond to the transport speed (V3) of the chip cake (3) on the steel belt (2).

10. Method (V2) for monitoring and controlling the operation of an installation according to Claim 8 or 9,
**characterized in that**,
in a first step (S21) of the method (V2), step one (S11), step two (S12) and step three (S13) of the method (V1) according to one of Claims 1 to 5 are performed.

11. Method (V2) according to Claim 10,
**characterized in that**,
in a second step (S22), taking into consideration the assessment of the topography (T) as performed in step (S13), the control apparatus may be used in particular to set a strewing head slide (101, 102) of a strewing head (10) of the forming station (1) so as to optimize the operation of the installation and the topography (T), wherein it is possible to automatically correct the operation of the installation and the topography (T) of the chip cake (3).

12. Method (V2) according to Claim 10 or 11,
**characterized in that**,
in a third step (S23), taking into consideration the assessment of the topography (T) of the chip cake (3) in step three (S13), an automatic correction of the topography (T) of the chip cake (3) is displayed as a second display (A2) on the monitor as an overall view of the topography (T) with thickness average values (ΔD) of selected tracks of the measurement profile (P) or extrapolated profile (P0) and/or stored with further data suitable for characterizing the topography (T) and the chip cake (3), wherein a signal (S) that is able to be displayed on the monitor may be output.

13. Method (V2) according to one of Claims 10 to 12,
**characterized in that**,
in a fourth step (S24), the first display (A1) and/or the second display (A2) are/is assessed by an operator, wherein the operator,
in a fifth step (S25), is able to set in particular a strewing head slide (101, 102) of a strewing head (10) of the forming station (1) so as to optimize the operation of the installation and the topography (T) and to manually correct the operation of the installation and the topography (T) of the chip cake (3), and/or
is able to prompt the performing of the second step (S22) of automatically correcting the operation of the installation and the topography (T) of the chip cake (3).

## Revendications

1. Procédé (V1) permettant de vérifier un matelas de particules (3) en mouvement continu, qui est amené à une installation de pressage en continu pour la fabrication de panneaux de particules sur une bande d'acier (2), **caractérisé en ce que**
- dans une première étape (S11), une topographie (T) du matelas de particules (3) est mesurée en continu le long d'un profil de mesure (P) du matelas de particules (3) transversalement à la direction de transport (R3) du matelas de particules (3) sur la bande d'acier (2) au moyen d'un procédé de mesure de déplacement, et
- dans une deuxième étape (S12), la topographie mesurée (T) du profil (P) du matelas de particules (3) ou la topographie mesurée (T) du profil (P), extrapolée sur un profil (P0) transversalement et en particulier verticalement à la direction de transport (R3) du matelas de particules (3), est affichée en tant que premier affichage (A1) sur un moniteur, et
- dans une troisième étape (S13), une comparaison de la topographie mesurée (T) du profil (P) du matelas de particules (3) ou de la topographie mesurée (T) du profil (P), extrapolée sur un profil (P0) transversalement et en particulier verticalement à la direction de transport (R3) du matelas de particules (3), avec une topographie prédéterminée et/ou avec au moins une topographie stockée et/ou avec une épaisseur optimale prédéterminée (D) et/ou avec une plage de tolérance prédéterminée (ΔT) est effectuée.

2. Procédé (V1) selon la revendication 1, **caractérisé en ce que**
dans la deuxième étape (S12) la topographie mesurée (T) du profil (P) du matelas de particules (3) ou la topographie mesurée (T) du profil (P), extrapolée sur un profil (P0) transversalement et en particulier verticalement à la direction de transport (R3) du matelas de particules (3), est affichée en tant que premier affichage (A1) sur un moniteur avec d'autres données adaptées pour identifier la topographie (T) et le matelas de particules (3), et/ou
le profil (P) ou le profil extrapolé (P0) est stocké avec les autres données adaptées pour identifier la topographie (T) et le matelas de particules (3).

3. Procédé (V1) selon la revendication 1 ou 2, **caractérisé en ce que**
dans la troisième étape (S13), une évaluation de la topographie (T) est effectuée, dans lequel
l'évaluation de la comparaison de la topographie mesurée (T) avec la topographie prédéterminée et/ou stockée et/ou avec l'épaisseur prédéterminée (D) et/ou avec la plage de tolérance (ΔT) est sortie sous la forme d'un signal (S) qui peut être affiché sur l'affichage (A1) sur le moniteur et/ou peut être stocké.

4. Procédé (V1) selon l'une quelconque des revendications précédentes, **caractérisé en ce que**
la topographie (T) est mesurée avec une précision de +/- 4,0 mm et avantageusement avec une précision de +/- 2,0 mm, et est représentée sur le moniteur.

5. Procédé (V1) selon l'une quelconque des revendications précédentes, **caractérisé**
**en ce qu'**un dispositif (400) pour vérifier un matelas de particules (3) en mouvement continu, qui est amené à une installation de pressage continu pour la fabrication de panneaux de particules sur une bande d'acier (2) est utilisé, dans lequel
le dispositif est un équipement de mesure de déplacement (400) qui présente un capteur de déplacement (4) et qui est basé sur le principe de la mesure de temps de parcours, dans lequel
le capteur de déplacement (4) est disposé de manière à pouvoir être déplacé sur la bande d'acier (2) pour mesurer en continu une topographie (T) du matelas de particules (3) le long d'un profil de mesure (P) du matelas de particules (3) transversalement à la direction de transport (R3) du matelas de particules (3), dans lequel
une vitesse (V4) à laquelle le capteur de déplacement (4) est déplacé transversalement au matelas de particules (3) est de façon adaptée comprise entre 10 mm/s et 500 mm/s et avantageusement entre 35 mm/s et 350 mm/s.

6. Procédé (V1) selon la revendication 5, **caractérisé**
**en ce qu'**à une vitesse de déplacement (V4) dans une plage d'environ 345 mm/s, trois mesures par mm sont effectuées, et à une vitesse de déplacement dans une plage d'environ 15 mm/s, sept mesures par mm sont effectuées.

7. Procédé (V1) selon la revendication 5 ou 6, **caractérisé en ce que**
la vitesse de déplacement (V4) est réglée au moyen d'une boucle d'asservissement absolue ou relative, en continu, en particulier aussi en correspondance avec la vitesse de transport (V3) du matelas de particules (3) sur la bande d'acier (2), en particulier de telle sorte qu'il en résulte un profil de mesure (P) qui est de manière avantageuse substantiellement linéaire.

8. Installation pour la fabrication de panneaux de particules en continu, comprenant un poste de moulage (1) pour former un matelas de particules (3) sur une bande d'acier (2) afin d'amener le matelas de particules (3) à une installation de pressage, et comprenant un équipement de commande pour faire fonctionner l'installation, et comprenant un moniteur pour afficher l'état de fonctionnement de l'installation, dans laquelle, pour former le matelas de particules (3), le poste de moulage (1) présente au moins une tête de dispersion (10) qui est réglable au moyen d'un coulisseau de tête de dispersion (101, 102) à réglage électrique, dans laquelle l'installation présente un dispositif (400) permettant de vérifier un matelas de particules (3) en mouvement continu qui est amené à une installation de pressage en continu pour la fabrication de panneaux de particules sur une bande d'acier (2),
**caractérisée en ce que** le dispositif est un équipement de mesure de déplacement (400) qui présente un capteur de déplacement (4), et qui est basé sur le principe de la mesure du temps de parcours, dans laquelle, pour mesurer une topographie (T) du matelas de particules (3) en continu le long d'un profil de mesure (P) du matelas de particules (3) transversalement à la direction de transport (R3) du matelas de particules (3), le capteur de déplacement (4) est disposé de manière à pouvoir être déplacé sur la bande d'acier (2), et dans laquelle l'équipement de mesure de déplacement (400) est disposé dans la direction de transport (R3) de la bande d'acier (2) après le poste de moulage (1).

9. Installation selon la revendication 8, **caractérisée en ce que** l'équipement de mesure de déplacement (400) est un équipement de mesure laser (400) et le capteur de déplacement (4) est un capteur laser (4) qui peut en particulier être un laser de triangulation (4), dans laquelle l'équipement de mesure de déplacement (400) peut présenter une unité de nettoyage (7) pour le nettoyage régulier d'une optique du capteur de déplacement (4), et dans laquelle l'équipement de mesure de déplacement (400) présente un entraînement (5) pour le déplacement du capteur de déplacement (4) transversalement à la direction de transport (R3), et dans laquelle l'équipement de mesure de déplacement (400) est conçu de telle sorte que la vitesse de déplacement (V4) peut être réglée au moyen d'une boucle d'asservissement absolue ou relative, en continu ainsi qu'en correspondance avec la vitesse de transport (V3) du matelas de particules (3) sur la bande d'acier (2).

10. Procédé (V2) permettant de surveiller et de commander le fonctionnement d'une installation selon la revendication 8 ou 9, **caractérisé en ce que** l'étape une (S11), l'étape deux (S12) et l'étape trois (S13) du procédé (V1) selon l'une quelconque des revendications 1 à 5 sont effectuées dans une première étape (S21) du procédé (V2).

11. Procédé (V2) selon la revendication 10, **caractérisé en ce que** dans une deuxième étape (S22), en tenant compte de l'évaluation de la topographie (T) effectuée à l'étape (S13), l'équipement de commande peut être utilisé pour régler en particulier un coulisseau de tête de dispersion (101, 102) d'une tête de dispersion (10) du poste de moulage (1) pour optimiser le fonctionnement de l'installation et de la topographie (T), dans lequel une correction automatique du fonctionnement de l'installation et de la topographie (T) du matelas de particules (3) peut être effectuée.

12. Procédé (V2) selon la revendication 10 ou 11, **caractérisé en ce que** dans une troisième étape (S23), en tenant compte de l'évaluation de la topographie (T) du matelas de particules (3) à l'étape trois (S13), une correction automatique de la topographie (T) du matelas de particules (3) est affichée sous forme de vue d'ensemble de la topographie (T) avec des moyennes d'épaisseur (ΔD) de pistes sélectionnées du profil de mesure (P) ou du profil extrapolé (P0) en tant que deuxième affichage (A2) sur le moniteur, et/ou est stockée avec d'autres données adaptées pour identifier la topographie (T) et le matelas de particules (3), dans lequel un signal (S) peut être émis qui peut être affiché sur le moniteur.

13. Procédé (V2) selon l'une quelconque des revendications 10 à 12, **caractérisé en ce que** dans une quatrième étape (S24), le premier affichage (A1) et/ou le deuxième affichage (A2) sont évalués par un opérateur, dans lequel l'opérateur peut dans une cinquième étape (S25) régler en particulier un coulisseau de tête de dispersion (101, 102) d'une tête de dispersion (10) du poste de moulage (1) pour optimiser le fonctionnement de l'installation et la topographie (T) et peut effectuer une correction manuelle du fonctionnement de l'installation et de la topographie (T) du matelas de particules (3), et/ou peut provoquer l'exécution de la deuxième étape (S22) d'une correction automatique du fonctionnement de l'installation et de la topographie (T) du matelas de particules (3).
